# EUROPEAN PATENT APPLICATION

(11) **EP 4 791 051 A1**
(43) Date of publication of application: **12.08.2026**
(21) Application number: 26157691.2
(22) Date of filing: 10.02.2026
(51) Int. Cl.: H04W 4/70, H04W 4/90

(54) **METHOD FOR CONTROLLING AND MANAGING CONNECTIVITY OF GAS METERS AND GAS METERS THEREOF**

(30) Priority: 11.02.2025 IT 202500002553
(71) Applicant: Italgas Reti S.p.A., 10153 Torino (TO) (IT)
(72) Inventor: CERASOLI, TALISA, Torino (IT); GENDUSO, CALOGERO, Torino (IT); VIGLIAROLO, MONICA, VINOVO (TO) (IT); BILELLO, LUCA, MILANO (IT)
(74) Representative: Bird & Bird Società tra Avvocati S.r.l.

(57) **Abstract**

A method **(200)** for controlling and managing the connectivity of at least one gas meter **(100)** provided with an integrated e-UICC, in order to guarantee connectivity continuity for a data transmission to a remote acquisition system, of data and measurements indicative of gas deliveries generated by at least one gas meter (100) in a plurality of sites, even under at least one anomaly condition.

## Description

### Background of the present invention

### Field of the present invention

The present invention relates to the field of gas meters. In greater detail, the present invention relates to a method for controlling and managing the connectivity of gas meters to guarantee connectivity continuity for data transmission.

Furthermore, the present invention relates to a gas meter with an embedded universal integrated circuit card (=e-UICC).

### Background of the correlated art

It is known that a gas meter is a device installed at a site (a house, apartment, commercial building, industrial building, etc.), which benefits from the supply of combustible gas by a gas supplier, having the function of producing a measurement of the gas effectively delivered at that location. There are various types of gas meters, according to the technology used to measure the gas delivery. However, the most significant distinction is between a dynamic measuring principle and a static measuring principle.

As known, a SIM (Subscriber Identity Module) is a physical element capable of uniquely identifying a user on the mobile network, and an e-SIM (Embedded Subscriber Identity Module) is a SIM directly integrated in a device, such as a smartphone, a tablet, or a smartwatch; unlike conventional physical SIMs, e-SIMs do not require manual insertion of a card in the device and are instead integrated in the circuit and not subject to replacement.

Currently, with the increasing development and improvement of intelligent systems, gas meter remote reading systems are playing a very important part in modern data management and transmission systems from a gas meter to a data acquisition system. Therefore, it is necessary to guarantee a secure data transmission, which guarantees data confidentiality and continuous data transmission in the presence of anomalies.

Solutions are known which primarily provide for the use of physical and virtual cards integrated in gas meters, mainly aimed at guaranteeing correct user identification and sensitive data protection; in particular, patent document EP2836052 describes a method and a device for protecting data confidentiality based on an embedded integrated circuit card, verifying whether a terminal device is possessed by an authorized user or not and guaranteeing the protection of sensitive data.

Devices which comprise a single user identification module (commonly referred to as a "SIM" module) are also known, such a module allowing the devices to access a communication network. Commonly, such known devices are designed to accommodate only one module, commonly fixed by soldering to a printed circuit board of a device, to limit installation difficulties and management problems for multiple modules. Patent US2023413033, instead, describes a device provided with two identification modules and an inhibition circuit, which allows the automatic inhibition of a first module when the second module is present in the connector, allowing a simpler use of the second module.

Patent US8131318 describes a wireless communication device comprising at least one SIM card, an internal communication module and an external communication module, with the capability of switching between the two modules to improve connectivity and stability even under variable network conditions.

Moreover, patent CN104729612 describes a gas measurement device and a remote monitoring system using a specialized platform for measurement data transmission and management.

Finally, patent US2018295501, which describes a method for managing a multi-subscription SIM module, is known. The multi-subscription SIM module includes at least one memory adapted to store at least a first profile and a second profile associated with respective first and second mobile network operators. The memory includes a volatile part. The storage operation includes installing or updating the profiles by downloading one or more profiles downloaded from a remote host.

Communication technologies have been designed and deployed in the field for the uses and needs of mobile operators, and therefore are not fully suited to the needs of gas distributors. Indeed, although these networks have nationwide coverage, there remain residual areas of little or insufficient coverage, and mobile operators do not guarantee the necessary service level that gas distributors need instead. Current commercial gas meters equipped with a single SIM of a single operator have difficulty in guaranteeing continuous data transmission in the event of lack of network coverage by the operator in the area in which they are installed.

It is apparent that no gas meter equipped with at least one electronic communication device provided with an embedded integrated circuit card (=e-UICC) is known, capable of guaranteeing efficient and continuous data transmission between the gas meter and a remote acquisition system in the event of an anomaly which would result in inadequate or absent data transmission from the gas meter to the acquisition system. Possibly, the anomaly is caused by interruption of connectivity due to insufficient network coverage or connection problems of the communication network by the operator in the area in which they are installed, or caused by unscheduled maintenance/interventions by the operator.

### Summary of the present invention

It is the general object of the present invention to solve the aforesaid problems of the prior art by providing a gas meter equipped with at least one integrated embedded integrated circuit card (=e-UICC).

It is a first, more specific object of the present invention to provide a method for controlling and managing the connectivity of at least one gas meter to guarantee data transmission with continuity to a remote acquisition system for measurements indicative of gas deliveries generated by at least one gas meter in a plurality of sites, also under at least one anomaly condition.

It is a second, more specific object to provide a gas meter provided with at least one electronic communication device provided with at least one universal integrated circuit card (=e-UICC), configured to allow the communication between a plurality of mobile operator profiles, preventively loaded onto the universal integrated circuit card (= e-UICC).

This general object, as well as other more specific objects, is achieved are achieved by virtue of what disclosed in the appended claims, which form an integral part of the present description.

### Brief description of the drawings

These and other features and advantages of the present invention will be more apparent from the reading of the following detailed description of illustrative and non-limiting embodiments of the invention. For better intelligibility, the following description should be read with reference to the accompanying drawings, in which:
**Figure 1** is a functional simplified block diagram of a gas meter according to an embodiment of the present invention;
**Figures 2****,** **3****,** **4****,** **5** show, in terms of functional blocks, the operations performed by the gas meter in **Figure 1** to guarantee an efficient and continuous data transmission between the gas meter and remote acquisition system.

### Detailed description of exemplary and non-limiting embodiments of the present invention

In the present description, the term "universal integrated circuit card" (UICC)" means an integrated circuit card comprising a standard physical SIM (=UICC), or a physical e-SIM (=e-UICC) , or virtual i-SIMs (=i-UICC), or any other like component.

In particular, in the present description, the term SIM means the physical component that provides mobile connectivity as inserted manually into the device, while e-SIM means the physical component integrated in the device by soldering, i-SIM means a software key capable of performing all the univocal identification and cybersecurity functions of the SIM or of the e-SIM

In the future, e-SIMs (e-UICC) may become virtual i-SIMs (i-UICC).

With reference to the various figures in general, a preferred, non-limiting embodiment of a gas meter, indicated as a whole by reference numeral **100,** and an innovative method for controlling and managing according to the present invention, indicated as a whole by reference numeral **200,** are shown.

Reference will hereinafter be made thereto using the abbreviated notation **"meter 100"** and **"method 200".**

With reference to the figures, the described method **200** is designed for controlling and managing the connectivity of at least one meter provided with at least one embedded integrated circuit card(=e-UICC) . This method guarantees continuous data transmission and indicative measurements of gas deliveries to a remote acquisition system, even under communication network anomaly conditions which could cause inadequate or absent data transmission from the meter to the acquisition system.

Furthermore, the method **200** allows the management of a plurality of mobile operator profiles on the e-UICC of the meter. After verifying the connectivity of the profiles, the method allows switching between profiles to guarantee continuous data transmission without service interruptions.

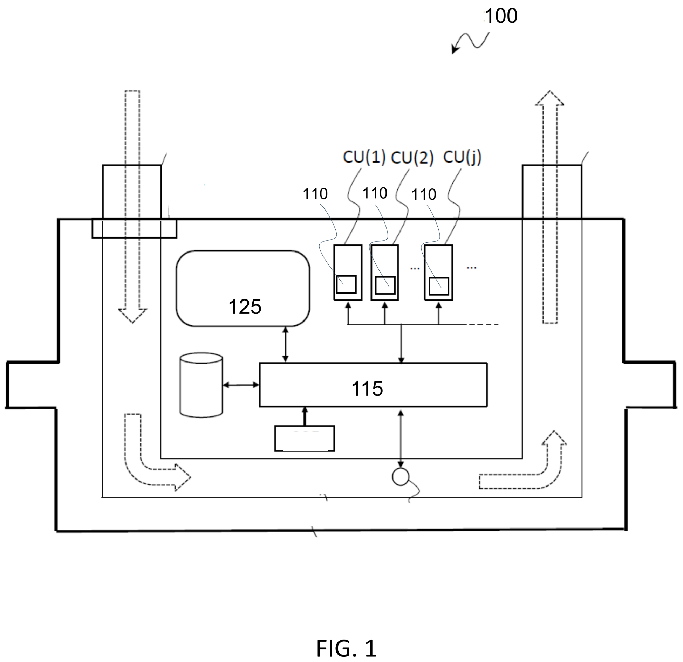

As shown in Fig. 1 a gas meter **100** comprises, according to the present invention:
- a measuring unit **125** for generating measurements indicating gas deliveries, operatively connected to a control unit **115;**
- two or more wireless communication units **CU(1); CU(2);...; (CU(j)** configured to communicate with a remote acquisition system exploiting at least a first or a second type of wireless communication link and to send generated measurements, in particular previously received by the control unit **115,** each wireless communication unit **CU(1); CU(2);...; (CU(j)** is configured with a specific communication link;
- the control unit **115** is configured to transmit measurements to the remote acquisition system by means of the first communication mode or the second communication mode, and to make a plurality of measurement transmission attempts by driving in sequence a first and a second plurality of wireless communication units **CU(1); CU(2);..; (CU(j),** and the communication links of each of said wireless communication units **CU(1); CU(2);...; (CU(j);**
- at least one electronic communication device **110** arranged in each wireless communication unit **CU(1); CU(2);...; (CU(j)** provided with at least one e-UICC
designed to guarantee efficient and continuous data transmission between the gas meter **100** and the remote acquisition system.

Advantageously, the electronic communication device provided with the e-UICC is preferably a modem based on NBIoT **(Narrowband Internet of Things) technology,** preferably according to the ETSI TS 136 331 specification. This is a low power network technology developed to connect IoT (Internet of Things) devices, which operates on one or more frequency bands, such as, for example: Band 3 (B3), Band 5 (B5), Band 8 (B8), Band 20 (B20), Band 28 (B28) and Band 32 (B32). It guarantees a total isotropic sensitivity (TIS) ≤ -110 dBm and a total radiated power (TRP) ≥ 18.5 dBm. In accordance with an advantageous embodiment of the present invention, the communication may support both Internet Protocol version 4 (IPv4) and Internet Protocol version 6 (IPv6).

Furthermore, the electronic communication device **110** provided with e-UICC is configured for the simultaneous management of a plurality of mobile operator profiles loaded on the e-UICC, which allow the gas meter **100** to switch from one profile to another after a time interval of unreachability of the remote acquisition system.

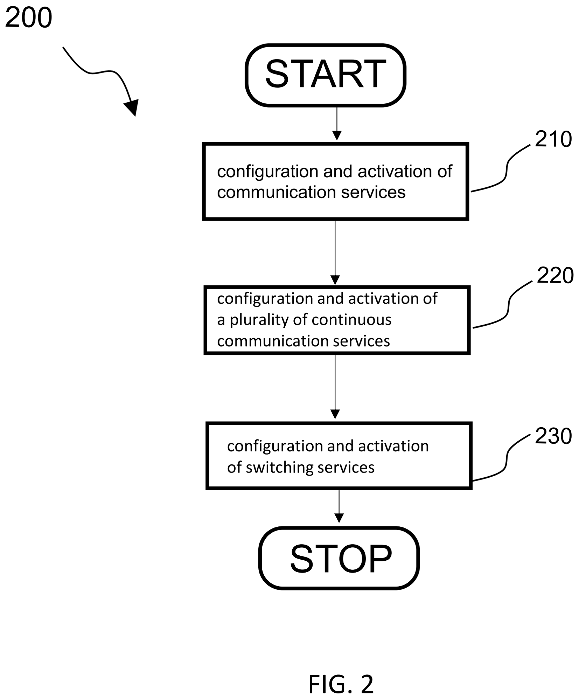

Fig. 2 shows a flow chart **200** of a method for controlling and managing the connectivity of at least one gas meter **100** to guarantee continuous transmission to a remote data acquisition system and measurements indicative of gas deliveries generated by at least one gas meter **100** in a plurality of sites, also in at least one anomaly condition.

The flow diagram has a start block START and an end block END; the corresponding steps from block **210** to block **230** are conventionally repeated multiple times while monitoring and managing the connectivity. The method **200** comprises the steps of:
- configuring and activating communication services **210** to guarantee a transmission of a plurality of data from the gas meter **100** to the remote acquisition system;
- configuring and activating a plurality of continuous communication services **220** to guarantee the transmission continuity of a plurality of data from the gas meter **100** to the remote acquisition system in an emergency situation with interruption of the data transmission itself;
- configuring and activating a plurality of switching services **230** of a plurality of mobile operator profiles.

Advantageously, the method mainly comprises the steps of:
- configuring and activating communication services **210** comprising a selection of at least a first profile of the plurality of profiles based on a measurement of a power value α of an electromagnetic signal emitted by the first profile, in order to guarantee a transmission of a plurality of data from the gas meter **100** to the remote acquisition system;
- configuring and activating a plurality of continuous communication services **220,** comprising:
   - monitoring the reachability of the remote acquisition system by the gas meter **100;**
   - after detecting a condition of unreachability of the remote acquisition system lasting for a parameterizable time interval t, scanning and detecting at least a second profile of the plurality of profiles by the gas meter **100,** by measuring a power value α of an electromagnetic signal emitted by the second profile;
   - switching from the first profile to the second profile, to restore the transmission towards the remote acquisition system,
   in order to guarantee transmission continuity of a plurality of data from the gas meter **100** to the remote acquisition system in an emergency data transmission interruption.

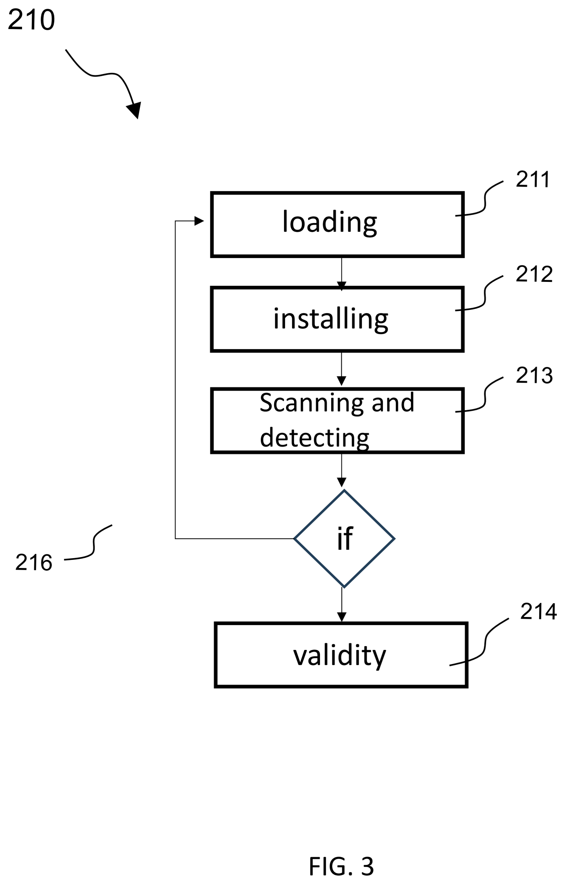

In particular, in accordance with a first configuration, as shown in Fig. 3, the step **210** of configuring and activating the communication services comprises the steps of:
a) selecting **211** on the e-UICC at least a first profile of the plurality of mobile operator profiles, by means of an **SM-DP** (Subscription Manager Data Preparation) platform;
b) locally installing **212** the gas meter **100** at the established site;
c) scanning and detecting **213** a power value α of an electromagnetic signal emitted by the first selected profile;
d) if the detected power value α is comprised in a range equal to -100 decibel-milliwatts (dBm) ≤ α≤ 45 decibel-milliwatts (dBm), validity **(214)** of the first profile;
dl) if the detected power value α is equal to α < -100 decibel-milliwatts (dBm), invalidating the first profile, and reiterating **(216)** steps from a) to c) with a second profile.

Advantageously, an **SM-DP** (Subscription Manager Data Preparation) platform allows managing the preparation and protection of e-UICC profiles, making it possible to download and install them on the gas meter **100,** ensuring that the data necessary for activation of the e-UICC are correctly transferred and managed, thereby guaranteeing connectivity to the mobile network.

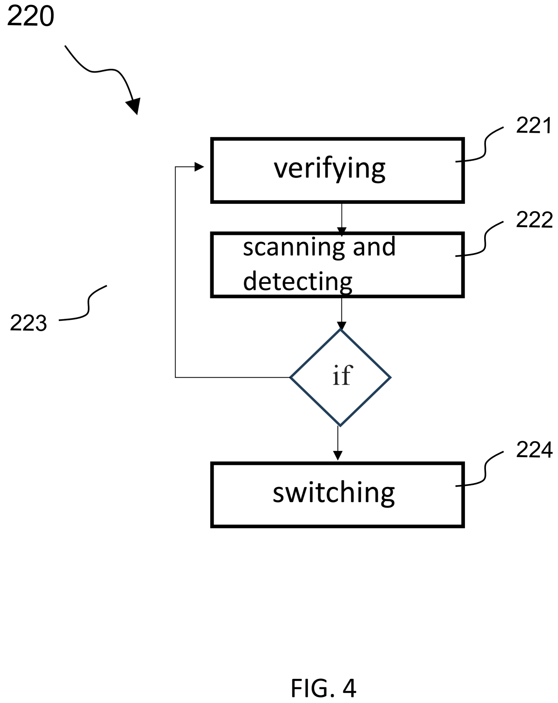

In accordance with a first configuration, as shown in Fig. 4, the step of configuring and activating **220** the plurality of continuous communication services of a plurality of data from the gas meter **100** comprises the steps of:
e) verifying **221** the unreachability, by means of at least one communication protocol, of the remote acquisition system for a parameterizable time interval t, preferably with t equal to 31 consecutive days;
f) scanning and detecting **222** a second profile having a power value α of the electromagnetic signal emitted by a second identified profile equal to -100 decibel-milliwatts (dBm) ≤ α ≤ 45 decibel-milliwatts (dBm);
f₁) if step f) does not allow the identification of a second profile, reiterating **223** the steps from e) to f) at a parameterizable time interval;
g) switching **224** from the first profile to the second profile, excluding the first profile preferably for an interval of 31 days.

Advantageously the step of configuring and activating **220** the plurality of continuous communication services is reiterated with a parameterizable timing; preferably the step **220** may be repeated every 31 days for 6 consecutive months, and then for the subsequent 3 months. Furthermore, if the step of scanning and detecting **222** does not allow identifying a reiteration profile, step **222** is repeated the next day and daily for a period of up to 15 consecutive days. From the sixteenth day, step **222** is repeated every 30 days. The parameterizable timing allows the process to be remotely optimized, depending on field conditions, and therefore the battery life to be preserved.

Preferably, the communication and usage application protocol in the step of verifying **221** the unreachability is the device language message specification (DLMS).

In detail, the scanning and detecting **222** of the second profile is performed by the gas meter **100** by means of the electronic communication device **110** provided with e-UICC. The device **110** scans the mobile networks available in the geographic area in which the gas meter **100** is installed.

For each mobile operator profile stored in the e-UICC, the electronic communication device **110** measures the power of the electromagnetic signal received from the network of the operator corresponding to the selected profile. The electronic communication device 110 compares each measured power value α with a predefined range. Preferably, the predefined range is -100 dBm ≤ α ≤ 45 dBm, in which, if the scan identifies one or more profiles with a power value α within the predefined range, the device selects as "second profile", preferably the profile with the highest power value α (stronger signal), thereby guaranteeing the best connection quality available among the options.

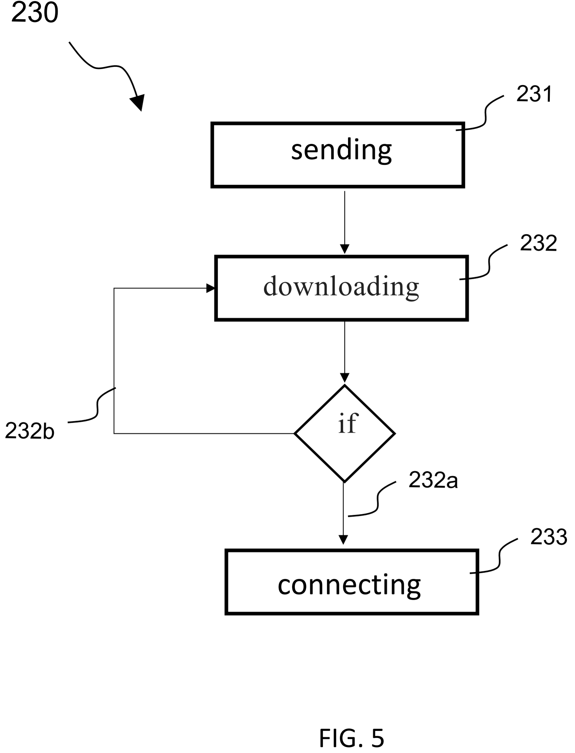

In a further configuration, if the scan identifies multiple profiles with similar power levels α, the device may select the second profile according to additional predefined criteria, such as configured priority, connectivity cost, or reliability history;
shown in Fig. 5, the step of configuring and activating **230** a plurality of switching services of a plurality of mobile operator profiles comprises the steps of:
h) sending **231** a command to the gas meter **100** by the remote acquisition system;
i) enabling the **SM-DP** (Subscription Manager Data Preparation) and downloading **232** the second operating profile by the electronic communication device **110;**
j) if the result of the download **232** is positive **232a,** then connecting **233** the gas meter **100** to the data network using the downloaded second operating profile;
j₁) if the result of the download **232** is negative **232b,** then reiterating the download **232** at a parameterizable time interval.

Advantageously, during step **231,** the remote acquisition system sets a determined **OBIS** (Object Identification System) code to a value of 1. In particular, the OBIS is a coding system used to convey specific measurement data and parameters in a gas meter. Each OBIS code represents a specific type of data, such as the consumption of gas, current, etc.

Furthermore, the enabling of the SM-DP platform preferably occurs by means of a **REST API** (Representational State Transfer Application Programming Interface) communication interface.

Finally, if the outcome of the download **232** is negative and therefore does not allow unloading a profile, step **232** is repeated on the following day and daily for a period of up to 15 consecutive days. From the sixteenth day, step **232** is repeated every 30 days.

Advantageously, the gas meter **100** is configured to autonomously use a profile available on the e-UICC for the operations of selecting, scanning and detecting, switching, without need for further external interventions

In accordance with a further configuration, while verifying the unreachability of the remote acquisition system, the gas meter, in autonomous and local manner:
- makes periodic communication attempts with the remote acquisition system at the application protocol level;
- locally logs the outcome of each communication attempt in its own memory;
- increments a local counter of the consecutive days of unreachability when a communication attempt does not have a positive outcome (e.g., timeout, no response, connection error);
- autonomously determines the reaching of the condition of unreachability when the local counter reaches a threshold value t, without need of commands or confirmations by the remote acquisition system.

Consequently, the gas meter autonomously determines that the remote acquisition system is unreachable, automatically activating the successive step of scanning and detecting a second profile of the plurality of profiles available on the e-UICC, based on the power measurement of the electromagnetic signal associated with each profile, to identify an alternative profile with adequate coverage at the specific geographic installation location of the gas meter.

Finally, in accordance with a further configuration, the universal integrated circuit card (e-UICC) is configured to support the progressive loading of mobile operator profiles over time, allowing the gas meter to dynamically expand the plurality of profiles available during its operational life cycle.

Of course, to meet local and specific requirements, a person skilled in the art can apply various logical and/or physical modifications and alterations to the above invention. More specifically, although the present invention has been described with some degree of particularity with reference to its preferred embodiment, it should be understood that various omissions, substitutions, and modifications in form and detail, and other embodiments are possible. In particular, various embodiments of the invention may also be put into practice without the specific details given in the preceding description to provide a deeper understanding of it; conversely, well-known functions may have been omitted or simplified so as not to burden the description with unnecessary details.

## Claims

1. A method **(200)** for controlling and managing the connectivity of at least one gas meter **(100)** to guarantee a connectivity continuity for at least one data transmission to a remote acquisition system, of data and measurements indicative of gas deliveries generated by the gas meter **(100)** in a plurality of sites, even under at least one anomaly condition,
wherein the gas meter **(100)** is provided with at least one embedded universal integrated circuit card (= e-UICC), configured to manage a plurality of mobile operator profiles,
**characterized in that** the method comprises the steps of:
- configuring and activating communication services **(210)** comprising a selection of at least a first profile of the plurality of profiles based on a measurement of a power value α of an electromagnetic signal emitted by the first profile, to guarantee a transmission of a plurality of data from the gas meter **(100)** to the remote acquisition system;
- configuring and activating a plurality of continuous communication services **(220),** comprising:
- monitoring the reachability of the remote acquisition system by the gas meter **(100);**
- after detecting a condition of unreachability of the remote acquisition system, scanning and detecting, by the gas meter **(100),** at least a second profile of the plurality of profiles by means of measuring a power value α of an electromagnetic signal emitted by the second profile;
- switching from the first profile to the second profile,
to guarantee transmission continuity of a plurality of data from the gas meter **(100)** to the remote acquisition system in an emergency situation of data transmission interruption.

2. A method **(200)** according to claim 1, wherein the step **(210)** of configuring and activating comprises the steps of:
a) selecting **(211)** on the e-UICC at least a first profile of the plurality of mobile operator profiles, by means of an **SM-DP** (Subscription Manager Data Preparation) platform;
b) locally installing **(212)** the gas meter **(100);**
c) scanning and detecting **(213)** the power value α of the electromagnetic signal emitted by the first selected profile;
d) if the detected power value α is comprised in a range equal to -100 decibel-milliwatts (dBm) ≤ α≤ 45 decibel-milliwatts (dBm), validating **(214)** the first profile;
d1) if the detected power value α is equal to α < -100 decibel-milliwatts (dBm), invalidating the first profile, reiterating **(216)** steps from a) to c) with a second profile.

3. A method **(200)** according to claim 1, wherein step of configuring and activating **(220)** the plurality of continuous communication services comprises the steps of:
e) verifying **(221)** the unreachability, by means of at least one communication protocol, of the remote acquisition system for a time interval t, with t equal to 31 consecutive days;
f) scanning and detecting **(222)** a second profile having a power value α of the electromagnetic signal emitted by a second identified profile equal to -100 decibel-milliwatts (dBm) ≤ α ≤ 45 decibel-milliwatts (dBm);
f₁) if step f) does not allow the identification of a second profile, reiterating **(223)** the steps from e) to f) at a parameterizable time interval;
g) switching **(224)** from the first profile to the second profile.

4. A method **(200)** according to claim 3, wherein step of configuring and activating **(220)** the plurality of continuous communication services is reiterated at a parameterizable time interval.

5. A method **(200)** according to claim 3, wherein the communication application protocol is the device language message specification (DLMS).

6. A method **(200)** according to claim 1, wherein the method **(200)** further comprises a step **(230)** of configuring and activating a plurality of switching services of a plurality of national mobile operator profiles, comprising the steps of:
h) sending **(231)** a command to the gas meter **(100)** by the remote acquisition system;
i) enabling the **SM-DP** (Subscription Manager Data Preparation) platform and downloading **(232)** the second operating profile by the electronic communication device **(110);**
j) if the result of the download **(232)** is positive **(232a),** connecting **(233)** the gas meter **(100)** to the data network using the downloaded second operating profile;
j₁) if the result of the download **(232)** is negative **(232b),** reiterating the download **(232)** at a parameterizable time interval.

7. A gas meter **(100)** comprising:
- a measuring unit **(125)** for generating measurements indicating gas deliveries, operatively connected to a control unit **(115);**
- two or more wireless communication units **(CU(1); CU(2);...;** (**CU(j)**) configured to communicate with a remote acquisition system by exploiting at least a first or a second type of wireless communication link and send generated measurements, in particular previously received by the control unit **(115),** each wireless communication unit **(CU(1); CU(2);...; (CU(j))** is configured with a specific communication link;
- said control unit **(115)** configured to transmit the measurements to said remote acquisition system and make a plurality of measurement transmission attempts by driving in sequence the first and second plurality of wireless communication units **(CU(1); CU(2);..; (CU(j)),** and the communication links of each of the first and second plurality of wireless communication units **(CU(1); CU(2);...; (CU(j)**);
**wherein** each plurality of wireless communication units **(CU(1); CU(2);...; (CU(j)**) comprises at least one electronic communication device **(110)** provided with at least one e-UICC designed to guarantee efficient and continuous data transmission between the gas meter **(100)** and the remote acquisition system,
**wherein** the gas meter **(100)** is configured to perform the steps of the method **(200)** according to claims 1 - 6.

8. A gas meter **(100)** according to claim 7, wherein the electronic communication device provided with e-UICC is configured to manage, at the same time, a plurality of profiles loaded on the e-UICC.

9. A gas meter **(100)** according to claim 7, wherein the electronic communication device provided with an e-UICC is preferably a NBIoT technology-based modem.
